# EUROPEAN PATENT APPLICATION

(11) **EP 3 081 613 A1**
(43) Date of publication of application: **19.10.2016**
(21) Application number: 14869628.9
(22) Date of filing: 11.12.2014
(51) Int. Cl.: C09K 3/10

(54) **SEALANT**

(30) Priority: 11.12.2013 JP 2013255849
(71) Applicant: Kuraray Co., Ltd., Kurashiki-shi, Okayama 710-0801 (JP); Amyris, Inc., Emeryville, CA 94608 (US)
(72) Inventor: SASAKI, Hiromitsu, Kamisu-shi Ibaraki 314-0197 (JP); UEHARA, Yosuke, Kamisu-shi Ibaraki 314-0197 (JP)
(74) Representative: Müller-Boré & Partner Patentanwälte PartG mbB
(86) International application number: PCT/JP2014/082792
(87) International publication number: WO 2015/087954

(57) **Abstract**

A sealant including a block copolymer comprising a polymer block (a) comprising a structural unit derived from an aromatic vinyl compound and a polymer block (b) comprising 1 to 100% by mass of a structural unit (b1) derived from farnesene and 99 to 0% by mass of a structural unit (b2) derived from a conjugated diene other than farnesene, a mass ratio [(a)/(b)] of the polymer block (a) to the polymer block (b) being 5/95 to 45/55, is excellent in molding processability, flexibility, and adhesiveness and also excellent in sound insulation properties and vibration-damping properties (vibration attenuation properties) in a high frequency region in the neighborhood of 4,000 Hz even under high temperatures.

## Description

### TECHNICAL FIELD

The present invention relates to a sealant using a block copolymer constituted of a polymer block containing a structural unit derived from an aromatic vinyl compound and a polymer block containing a structural unit derived from a conjugated diene.

### BACKGROUND ART

A sealant is used in wide industrial fields including constructional, electrical, and automobile industries, and so on. The sealant includes a crosslinking type and a hot melt type. Examples of the crosslinking type include a silicone-based sealant, a urethane-based sealant, a polysulfide-based sealant, a vulcanized rubber-based sealant, and the like; whereas examples of the hot melt type include an EVA-based sealant, a soft vinyl chloride-based sealant, a butyl rubber-based sealant, a thermoplastic elastomer-based sealant, such as a styrene-based thermoplastic elastomer, etc., and the like. The sealant is widely used for automobiles, building materials, and the like as a material of filling a joint for the purpose of obtaining watertightness or airtightness. The sealant is required to have high airtightness, and although varying depending upon an application to be used, in many cases, the sealant is required to have properties, such as flexibility, high mechanical strength, etc.

In a site requiring such properties, in the existing circumstances, a cartridge filled with a reactive curable sealant, such as a silicone-based sealant, a urethane-based sealant, a polysulfide-based sealant, etc., is used, and filling or bonding with the reactive curable sealant at the time of or after assembling of a sealing portion in the factory or workplace; installation is performed at the time of assembling by using a natural rubber- or synthetic rubber-based molding packing; or a hot melt sealant, such as a butyl rubber-based sealant, a styrene-based thermoplastic elastomer-based sealant, etc., is applied at the time of assembling of a sealing portion, and assembling is then performed.

For example, PTL 1 discloses a hot melt composition containing a high molecular weight styrene-based block polymer. PTL 1 discloses that the hot melt composition has thorough adhesiveness even to hardly adhesive polyolefin-based resin materials; and even when placed under high temperatures, the hot melt composition is not deteriorated and is excellent in adhesive properties, sealing properties, and the like.

In addition, PTL 2 discloses a hot melt sealant including a thermoplastic elastomer composition containing a hydrogenation product of a block copolymer constituted of a polymer block containing a structural unit derived from an aromatic vinyl compound and a polymer block containing a structural unit derived from a conjugated diene. PTL 2 discloses that the hot melt sealant is excellent in flexibility, processability, heat resistance, vibration-damping properties, oxygen gas barrier properties, and the like.

Although PTLs 3 and 4 describe polymers of β-farnesene, practical applications are not thoroughly investigated.

### CITATION LIST

### PATENT LITERATURE

PTL 1: JP 2005-097360A
PTL 2: JP 2011-074168A
PTL 3: JP 2012-502135A
PTL 4: JP 2012-502136A

### SUMMARY OF INVENTION

### TECHNICAL PROBLEM

However, in recent years, with the spread of hybrid cars and electric cars, improvements in sound insulation properties and vibration-damping properties in a high frequency region in the neighborhood of 4,000 Hz, which were hitherto unconcerned in automobiles with only an internal combustion engine, have been required. According to conventional sealants using a thermoplastic elastomer composition, these required performances cannot be sufficiently satisfied, and hence, more improvements in performance have been required.

Now, a problem of the present invention is to provide a sealant which is not only excellent in molding processability, flexibility, and adhesiveness but also excellent in sound insulation properties and vibration-damping properties (vibration attenuation properties) in a high frequency region in the neighborhood of 4,000 Hz even under high temperatures.

### SOLUTION TO PROBLEM

The present inventors made extensive and intensive investigations. As a result, it has been found that a sealant including a specified block copolymer having a structural unit derived from farnesene or a hydrogenation product thereof is able to solve the foregoing problem, leading to accomplishment of the present invention.

Specifically, the present invention is concerned with a sealant including a block copolymer (A) including a polymer block (a) containing a structural unit derived from an aromatic vinyl compound and a polymer block (b) containing 1 to 100% by mass of a structural unit (b1) derived from farnesene and 99 to 0% by mass of a structural unit (b2) derived from a conjugated diene other than farnesene, a mass ratio [(a)/(b)] of the polymer block (a) to the polymer block (b) being 5/95 to 45/55.

### ADVANTAGEOUS EFFECTS OF INVENTION

In accordance with the present invention, it is able to provide a sealant which is excellent in molding processability, flexibility, and adhesiveness and also excellent in sound insulation properties and vibration-damping properties (vibration attenuation properties) in a high frequency region in the neighborhood of 4,000 Hz even under high temperatures.

### DESCRIPTION OF EMBODIMENTS

The sealant of the present invention is a sealant comprising a block copolymer (A) comprising a polymer block (a) comprising a structural unit derived from an aromatic vinyl compound and a polymer block (b) comprising 1 to 100% by mass of a structural unit (b1) derived from farnesene and 99 to 0% by mass of a structural unit (b2) derived from a conjugated diene other than farnesene, a mass ratio [(a)/(b)] of the polymer block (a) to the polymer block (b) being 5/95 to 45/55.

### [Block copolymer]

The block copolymer (A) which is used in the present invention is a block copolymer including a polymer block (a) containing a structural unit derived from an aromatic vinyl compound and a polymer block (b) containing 1 to 100% by mass of a structural unit (b1) derived from farnesene and 99 to 0% by mass of a structural unit (b2) derived from a conjugated diene other than farnesene, a mass ratio [(a)/(b)] of the polymer block (a) to the polymer block (b) being 5/95 to 45/55.

The aforementioned polymer block (a) is constituted of a structural unit derived from an aromatic vinyl compound. Examples of such an aromatic vinyl compound include styrene, α-methylstyrene, 2-methylstyrene, 3-methylstyrene, 4-methylstyrene, 4-propylstyrene, 4-t-butylstyrene, 4-cyclohexylstyrene, 4-dodecylstyrene, 2,4-dimethylstyrene, 2,4-diisopropylstyrene, 2,4,6-trimethylstyrene, 2-ethyl-4-benzylstyrene, 4-(phenylbutyl)styrene, 1-vinylnaphthalene, 2-vinylnaphthalene, vinylanthracene, N,N-diethyl-4-aminoethylstyrene, vinylpyridine, 4-methoxystyrene, monochlorostyrene, dichlorostyrene, divinylbenzene, and the like. These aromatic vinyl compounds may be used solely or in combination of two or more thereof. Among those, one or more of styrene, α-methylstyrene, and 4-methylstyrene are more preferred, and styrene is still more preferred.

A peak top molecular weight (Mp) of the polymer block (a) is preferably 4,000 to 100,000, more preferably 5,000 to 80,000, and still more preferably 6,000 to 60,000 from the viewpoints of molding processability, flexibility, adhesiveness, and the like.

The peak top molecular weight (Mp) as referred to in the present specification means a value measured by the method described in the Examples as described later.

The aforementioned polymer block (b) contains 1 to 100% by mass of a structural unit (b1) derived from farnesene and 99 to 0% by mass of a structural unit (b2) derived from a conjugated diene other than farnesene. Although the structural unit (b1) may be a structural unit derived from either α-farnesene or β-farnesene represented by the following formula (I), it is preferably a structural unit derived from β-farnesene from the viewpoint of ease of production of the block copolymer (A). α-Farnesene and β-farnesene may be used in combination.

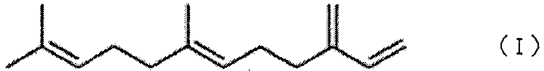

As for the structural unit (b2) derived from a conjugated diene other than farnesene, examples of the conjugated diene include butadiene, isoprene, 2,3-dimethylbutadiene, 2-phenyl-butadiene, 1,3-pentadiene, 2-methyl-1,3-pentadiene, 1,3-hexadiene, 1,3-octadiene, 1,3-cyclohexadiene, 2-methyl-1,3-octadiene, 1,3,7-octatriene, myrcene, chloroprene, and the like. These may be used solely or in combination of two or more thereof. Among those, one or more of butadiene, isoprene, and myrcene are more preferred, and butadiene and/or isoprene is still more preferred.

The polymer block (b) contains 1 to 100% by mass of the structural unit (b1) derived from farnesene and contains 99 to 0% by mass of the structural unit (b2) derived from a conjugated diene other than farnesene. When the content of the structural unit (b1) derived from farnesene is less than 1% by mass, the molding processability, flexibility and adhesiveness of the sealant are lowered, and the sound insulation properties and vibration-damping properties under high temperatures are lowered. The content of the structural unit (b1) in the polymer block (b) is preferably 30 to 100% by mass, and more preferably 45 to 100% by mass. In the case where the polymer block (b) contains the structural unit (b2) derived from a conjugated diene other than farnesene, the content of the structural unit (b2) is preferably 70% by mass or less, and more preferably 55% by mass or less.

In the case where the sealant of the present invention contains a softening agent (B) as described later, the content of the structural unit (b1) derived from farnesene which the polymer block (b) has is more preferably 30 to 90% by mass, and still more preferably 45 to 85% by mass. The content of the structural unit (b2) derived from a conjugated diene other than farnesene is more preferably 10 to 70% by mass, and still more preferably 15 to 55% by mass.

In the case where the sealant of the present invention does not contain a softening agent (B) as described later, the content of the structural unit (b1) derived from farnesene which the polymer block (b) has is more preferably 50 to 100% by mass, still more preferably 70 to 100% by mass, yet still more preferably 90 to 100% by mass, and even yet still more preferably 100% by mass. The content of the structural unit (b2) derived from a conjugated diene other than farnesene is more preferably 50% by mass or less, still more preferably 30% by mass or less, and yet still more preferably 10% by mass or less.

From the viewpoints of improvements in adhesiveness, heat resistance, and weather resistance, a total content of the structural unit (b1) and the structural unit (b2) in the polymer block (b) is preferably 80% by mass or more, more preferably 90% by mass or more, still more preferably 95% by mass or more, yet still more preferably 99% by mass or more, and even yet still more preferably 100% by mass.

As for the block copolymer (A) which is used in the present invention, from the viewpoints of improvements in adhesiveness, heat resistance, and weather resistance, a part or the whole of the unsaturated double bond (carbon-carbon double bond) in the polymer block (b) may be hydrogenated. On that occasion, a hydrogenation rate of the polymer block (b) is preferably 70 mol% or more, more preferably 80 mol% or more, and still more preferably 85 mol% or more.

The hydrogenation rate of the unsaturated double bond in the polymer block (b) may be determined from a value obtained by measuring the content of the unsaturated double bond in the polymer block (b) before and after the hydrolysis by means of determination of iodine value, infrared spectrophotometry (IR), nuclear magnetic resonance (¹H-NMR), or the like.

A binding form between the polymer block (a) and the polymer block (b) is not particularly limited, and it may be a linear, branched or radial form or may be a combination of two or more thereof. Among those, a form where the respective blocks are bound in a linear form is preferred, and when the polymer block (a) is expressed by "a", and the polymer block (b) is expressed by "b", a binding form expressed by (a-b)ₗ, a-(b-a)ₘ, or b-(a-b)ₙ is preferred. Each of 1, m, and n independently represents an integer of 1 or more.

Among those, the block copolymer (A) is preferably a block copolymer including two or more of the polymer blocks (a) and one or more of the polymer blocks (b). As for the binding form, a triblock copolymer expressed by (a-b-a) is preferred from the viewpoint of obtaining a sealant which is excellent in molding processability, flexibility, and adhesiveness and also excellent in sound insulation properties and vibration-damping properties under high temperatures.

In the case where the block copolymer (A) has two or more of the polymer blocks (a) or two or more of the polymer blocks (b), the respective polymer blocks may be a polymer block containing the same structural unit or may be a polymer block containing different structural units from each other. For example, in the two polymer blocks (a) in the triblock copolymer expressed by [a-b-a], the respective aromatic vinyl compounds may be the same as or different from each other in terms of the kind thereof.

A mass ratio [(a)/(b)] of the polymer block (a) to the polymer block (b) in the block copolymer (A) is 5/95 to 45/55. When the mass ratio [(a)/(b)] falls outside the foregoing range, a sealant which is excellent in molding processability, flexibility, and adhesive properties and also excellent in sound insulation properties and vibration-damping properties may not be obtained. From the foregoing viewpoint, the mass ratio [(a)/(b)] of the polymer block (a) to the polymer block (b) is preferably 10/90 to 45/55, more preferably 10/90 to 40/60, and still more preferably 10/90 to 35/65.

So long as the gist of the present invention is not impaired, the block copolymer (A) may contain a polymer block (c) constituted of other monomer, in addition to the aforementioned polymer block (a) and polymer block (b).

Examples of such other monomer include unsaturated hydrocarbon compounds, such as propylene, 1-butene, 1-pentene, 4-methyl-1-pentene, 1-hexene, 1-octene, 1-decene, 1-undecene, 1-dodecene, 1-tridecene, 1-tetradecene, 1-pentadecene, 1-hexadecene, 1-heptadecene, 1-octadecene, 1-nonadecene, 1-eicosene, etc.; functional group-containing unsaturated compounds, such as acrylic acid, methacrylic acid, methyl acrylate, methyl methacrylate, acrylonitrile, methacrylonitrile, maleic acid, fumaric acid, crotonic acid, itaconic acid, 2-acryloylethanesulfonic acid, 2-methacryloylethanesulfonic acid, 2-acrylamide-2-methylpropanesulfonic acid, 2-methacrylamide-2-methylpropanesulfonic acid, vinylsulfonic acid, vinyl acetate, methyl vinyl ether, etc.; and the like. These may be used solely or in combination of two or more thereof.

In the case where the block copolymer (A) has the polymer block (c), its content is preferably 50% by mass or less, more preferably 40% by mass or less, still more preferably 30% by mass or less, and most preferably 10% by mass or less.

A total content of the aforementioned polymer block (a) and polymer block (b) in the block copolymer (A) is preferably 50% by mass or more, more preferably 60% by mass or more, still more preferably 70% by mass or more, and yet still more preferably 90% by mass or more.

A peak top molecular weight (Mp) of the block copolymer (A) is preferably 4,000 to 500,000, more preferably 9,000 to 400,000, still more preferably 50,000 to 400,000, and most preferably 70,000 to 390,000 from the viewpoints of molding processability, flexibility, adhesiveness, and the like.

The peak top molecular weight (Mp) as referred to in the present specification means a value measured by the method described in the Examples as described later.

A molecular weight distribution (Mw/Mn) of the block copolymer (A) is preferably 1 to 4, more preferably 1 to 3, and still more preferably 1 to 2. When the molecular weight distribution falls within the foregoing range, scattering in viscosity of the block copolymer (A) is small, and handling is easy.

As for the block copolymer (A), from the viewpoint of an improvement in molding processability of the sealant to be obtained, its melt flow rate (MFR) measured under the conditions described in the Examples is preferably 1 g/10 min or more, more preferably 10 g/10 min or more, still more preferably 30 g/10 min or more, and yet still more preferably 40 g/10 min or more.

As for the block copolymer (A), from the viewpoint of an improvement in flexibility of the sealant to be obtained, its hardness (type A hardness) measured under the conditions described in the Examples is preferably 60 or less, more preferably 55 or less, still more preferably 40 or less, yet still more preferably 30 or less, and even yet still more preferably 10 or less. The foregoing hardness is preferably 1 or more, more preferably 2 or more, and still more preferably 3 or more from the viewpoint of strength.

As for the block copolymer (A), from the viewpoint of guaranteeing the function of adhesiveness of the sealant to be obtained, its adhesive force measured under the conditions described in the Examples is preferably 0.2 or more, more preferably 0.5 or more, and still more preferably 0.7 or more.

As for the block copolymer (A), from the viewpoint that it is excellent in sound insulation properties and vibration-damping properties under high temperatures, its loss factor in the range of from 40 to 80°C under an excitation condition with a frequency of 4,000 Hz is preferably 0.070 or more, more preferably 0.075 or more, still more preferably 0.080 or more, and yet still more preferably 0.085 or more. When the loss factor falls within the foregoing range, the sealant to be obtained according to the present invention is more improved in vibration-damping properties, so that it may absorb the vibration from the outside, and hence, the sound insulation properties are improved, too.

### [Production method of block copolymer (A)]

The block copolymer (A) may be produced by a solution polymerization method, the method described in JP 2012-502135A or JP 2012-502136A, or the like. Among those, a solution polymerization method is preferred, and known methods, for example, an ionic polymerization method, such as anionic polymerization, cationic polymerization, etc., a radical polymerization method, etc., may be applied. Above all, an anionic polymerization method is preferred.

According to the anionic polymerization method, an aromatic vinyl compound, farnesene and/or a conjugated diene other than farnesene, and optionally other monomer constituting the polymer block (c) are successively added in the presence of a solvent, an anionic polymerization initiator, and optionally a Lewis base, thereby obtaining the block copolymer (A).

Examples of the anionic polymerization initiator include alkali metals, such as lithium, sodium, potassium, etc.; alkaline earth metals, such as beryllium, magnesium, calcium, strontium, barium, etc.; lanthanide rare earth metals, such as lanthanum, neodymium, etc.; compounds containing the aforementioned alkali metal, alkaline earth metal or lanthanide rare earth metal; and the like. Among those, compounds containing an alkali metal or an alkaline earth metal are preferred, and organic alkali metal compounds are more preferred.

Examples of the organic alkali metal compound include organic lithium compounds, such as methyllithium, ethyllithium, n-butyllithium, sec-butyllithium, t-butyllithium, hexyllithium, phenyllithium, stilbenelithium, dilithiomethane, dilithionaphthalene, 1,4-ditlihiobutane, 1,4-dilithio-2-ethylcyclohexane, 1,3,5-trilithiobenzene, etc.; sodium naphthalene; potassium naphtalene; and the like. Among those, organic lithium compounds are preferred, n-butyllithium and sec-butyllithium are more preferred, and sec-butyllithium is especially preferred. The organic alkali metal compound may also be used as an organic alkali metal amide through a reaction with a secondary amine, such as diisopropylamine, dibutylamine, dihexylamine, dibenzylamine, etc.

Although a use amount of the organic alkali metal compound which is used for the polymerization varies depending upon the molecular weight of the block copolymer (A), in general, it is in the range of from 0.01 to 3% by mass relative to the total amount of the aromatic vinyl compound, farnesene, and the conjugated diene other than farnesene.

The solvent is not particularly limited so long as it does not adversely affect the anionic polymerization reaction, and examples thereof include saturated aliphatic hydrocarbons, such as n-pentane, isopentane, n-hexane, n-heptane, isooctane, etc.; saturated alicyclic hydrocarbons, such as cyclopentane, cyclohexane, methylcyclopentane, etc.; aromatic hydrocarbons, such as benzene, toluene, xylene, etc.; and the like. These may be used solely or in combination of two or more thereof.

The Lewis base plays a role to control microstructures in the structural unit derived from farnesene and the structural unit derived from a conjugated diene other than farnesene. Examples of such a Lewis base include ether compounds, such as dibutyl ether, diethyl ether, tetrahydrofuran (THF), dioxane, ethylene glycol diethyl ether, etc.; pyridine; tertiary amines, such as N,N,N',N'-tetramethylethylenediamine (TMEDA), trimethylamine, etc.; alkali metal alkoxides, such as potassium t-butoxide, etc.; phosphine compounds; and the like. In the case of using a Lewis base, in general, its amount is preferably in the range of from 0 to 1,000 molar equivalents per mole of the anionic polymerization initiator.

A temperature of the polymerization reaction is in the range of generally from -80 to 150°C, preferably from 0 to 100°C, and more preferably from 10 to 90°C. The polymerization reaction may be performed in a batchwise mode or a continuous mode. The block copolymer (A) may be produced by feeding the respective monomers continuously or intermittently into the polymerization reaction solution in such a manner that the existent amounts of the aromatic vinyl compound, farnesene and/or the conjugated diene other than farnesene in the polymerization reaction system fall within the specified ranges, or successively adding the respective monomers so as to have specified ratios in the polymerization reaction solution.

The polymerization reaction may be terminated by the addition of an alcohol, such as methanol, isopropanol, etc., as a polymerization terminator. The block copolymer (A) may be isolated by pouring the resulting polymerization reaction solution into a poor solvent, such as methanol, etc., to deposit the block copolymer (A), or by washing the polymerization reaction solution with water and separating the polymerization reaction product, followed by drying.

In the present polymerization process, though the unmodified block copolymer (A) may be obtained as described above, the modified block copolymer (A) may also be obtained by introducing a functional group into the aforementioned block copolymer (A) prior to a hydrogenation process as described later. Examples of the functional group which may be introduced include an amino group, an alkoxysilyl group, a hydroxyl group, an epoxy group, a carboxyl group, a carbonyl group, a mercapto group, an isocyanate group, an acid anhydride, and the like.

Examples of the modification method of the block copolymer (A) include a method in which prior to adding a polymerization terminator, a modifying agent capable of reacting with a polymerization active terminal, such as tin tetrachloride, tetrachlorosilane, dimethyldichlorosilane, dimethyldiethoxysilane, tetramethoxysilane, tetraethoxysilane, 3-aminopropyltriethoxysilane, tetraglycidyl-1,3-bisaminomethylcyclohexane, 2,4-tolylene diisocyanate, 4,4'-bis(diethylamino)benzophenone, N-vinylpyrrolidone, etc., or other modifying agent described in JP 2011-132298A is added. A material obtained by grafting maleic anhydride or the like on the copolymer after isolation may also be used.

A position at which the functional group is introduced may be either a polymerization terminal or side chain of the block copolymer (A). The aforementioned functional group may be introduced solely or in combination of two or more thereof. In general, an amount of the modifying agent is preferably in the range of from 0.01 to 10 molar equivalents to the anionic polymerization initiator.

Although the obtained block copolymer (A) or modified block copolymer (A) by the aforementioned method may be used directly as the block copolymer (A), a hydrogenated block copolymer obtained by subjecting the foregoing block copolymer (A) to a hydrogenation process may also be used as the block copolymer (A). As a method of performing the hydrogenation, a known method may be adopted. For example, the hydrogenation reaction is performed by allowing a Ziegler catalyst; a nickel, platinum, palladium, ruthenium, or rhodium metal catalyst supported on carbon, silica, diatomaceous earth, or the like; an organic metal complex having a cobalt, nickel, palladium, rhodium, or ruthenium metal; or the like to exist as a hydrogenation catalyst in a solution in which the block copolymer (A) is dissolved in a solvent which does not affect the hydrogenation reaction. Among those, it is preferred to use palladium carbon in which palladium is supported on carbon as the hydrogenation catalyst.

In the hydrogenation reaction, a hydrogen pressure is preferably 0.1 to 20 MPa, a reaction temperature is preferably 100 to 200°C, and a reaction time is preferably 1 to 20 hours.

### [Softening agent (B)]

For the purpose of imparting flexibility, the sealant of the present invention may contain a softening agent (B). Examples of such a softening agent (B) include paraffin-based, naphthene-based, or aromatic process oils; phthalic acid derivatives, such as dioctyl phthalate, dibutyl phthalate, etc.; white oil; mineral oils; liquid co-oligomers between ethylene and an α-olefin; liquid paraffins polybutene; low molecular weight polyisobutylene; liquid polydienes, such as liquid polybutadiene, liquid polyisoprene, a liquid polyisoprene/butadiene copolymer, a liquid styrene/butadiene copolymer, a liquid styrene/isoprene copolymer, etc.; hydrogenation products thereof; and the like. Among those, from the viewpoint of compatibility with the block copolymer (A), paraffin-based process oils; liquid co-oligomers between ethylene and an α-olefin; liquid paraffins; low molecular weight polyisobutylene; and hydrogenation products thereof are preferred, and hydrogenation products of paraffin-based process oils are more preferred.

A content proportion of the softening agent (B) is preferably in the range of from 10 to 200 parts by mass, and more preferably in the range of from 20 to 150 parts by mass based on 100 parts by mass of the block copolymer (A) from the viewpoint of obtaining a sealant which is excellent in molding processability, flexibility, and adhesiveness and also high in loss factor. A content proportion of the softening agent (B) is preferably 10 to 500 parts by mass, more preferably 50 to 400 parts by mass, and still more preferably 100 to 350 parts by mass based on 100 parts by mass of the block copolymer (A) from the viewpoint of obtaining a sealant which is very excellent in flexibility.

### [Polyphenylene ether-based resin (C)]

The sealant of the present invention may further contain a polyphenylene ether-based resin (C) from the viewpoint of obtaining a sealant which is excellent in molding processability, flexibility, and adhesiveness and also high in loss factor. As such a polyphenylene ether-based resin (C), for example, a polymer having a structural unit represented by the following general formula (II) may be used.

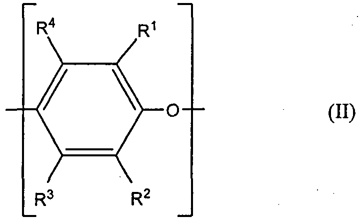

(In the formula, each of R¹, R², R³, and R⁴ independently represents a hydrogen atom, a halogen atom, a hydrocarbon group, a substituted hydrocarbon group, an alkoxy group, a cyano group, a phenoxy group, or a nitro group.)

As the polyphenylene ether-based resin (C), those represented by the foregoing general formula (II), wherein R¹ and R² are an alkyl group, particularly an alkyl group having 1 to 4 carbon atoms, are preferred. In addition, those represented by the foregoing general formula (II), wherein R³ and R⁴ are a hydrogen atom or an alkyl group having 1 to 4 carbon atoms, are preferred.

Examples of the polyphenylene ether-based resin (C) include poly(2,6-dimethyl-1,4-phenylene) ether, poly(2,6-diethyl-1,4-phenylene) ether, poly(2-methyl-6-ethyl-1,4-phenylene) ether, poly(2-methyl-6-propyl-1,4-phenylene) ether, poly(2,6-dipropyl-1,4-phenylene) ether, poly(2-ethyl-6-propyl-1,4-phenylene) ether, poly(2,6-dimethoxy-1,4-phenylene) ether, poly(2,6-dichloromethyl-1,4-phenylene) ether, poly(2,6-dibromomethyl-1,4-phenylene) ether, poly(2,6-diphenyl-1,4-phenylene) ether, poly(2,6-ditolyl-1,4-phenylene) ether, poly(2,6-dichloro-1,4-phenylene) ether, poly(2,6-dibenzyl-1,4-phenylene) ether, poly(2,5-dimethyl-1,4-phenylene) ether, and the like. Among those, the polyphenylene ether-based resin (C) is especially preferably poly(2,6-dimethyl-1,4-phenylene) ether. These may be modified with a modifying agent having a polar group. Examples of the polar group include an acid halide, a carbonyl group, an acid anhydride, an acid amide, a carboxylic acid ester, an acid azide, a sulfone group, a nitrile group, a cyano group, an isocyanic acid ester, an amino group, an imide group, a hydroxyl group, an epoxy group, an oxazoline group, a thiol group, and the like. These polyphenylene ether-based resins may be a mixture with a polystyrene resin.

The polyphenylene ether-based resin (C) which is used in the present invention is preferably one having a number average molecular weight in the range of from 1,000 to 250,000. In particular, one having a number average molecular weight in the range of from 5,000 to 150,000 is more preferred taking into consideration a balance of various physical properties.

In the case of containing the polyphenylene ether-based resin (C) in the sealant of the present invention, its content is preferably in the range of from 5 to 60 parts by mass, and more preferably in the range of from 10 to 60 parts by mass based on 100 parts by mass of the block copolymer (A) from the viewpoint of obtaining a sealant which is excellent in molding processability, flexibility, and adhesiveness and also high in loss factor.

### [Tackifier resin (D)]

So long as the gist of the present invention is not impaired, the sealant of the present invention may contain a tackifier resin (D), if desired. As such a tackifier resin (D), those which have hitherto been used as a resin for imparting tackiness may be used without particular limitations. Examples thereof include rosin-based resins, such as gum rosin, tall oil rosin, wood rosin, hydrogenated rosin, disproportionated rosin, polymerized rosin, rosin esters thereof, e.g., glycerin esters, pentaerythritol esters, etc.; terpene-based resins, such as terpene resins composed mainly of α-pinene, β-pinene, dipentene, or the like, aromatic modified terpene resins, hydrogenated terpene resins, terpene phenol resins, etc.; optionally hydrogenated petroleum resins, such as (hydrogenated) aliphatic (C5 series) petroleum resins, (hydrogenated) aromatic (C9 series) petroleum resins, (hydrogenated) copolymer-based (C5/C9 series) petroleum resins, (hydrogenated) dicyclopentadiene-based petroleum resins, alicyclic saturated hydrocarbon resins, etc.; synthetic resins, such as styrene-based resins, e.g., poly(α-methylstyrene), an α-methylstyrene/styrene copolymer, a styrene-based monomer/aliphatic monomer copolymer, a styrene-based monomer/α-methylstyrene/aliphatic monomer copolymer, a styrene-based monomer copolymer, a copolymer of a styrene-based monomer and an aromatic monomer other than a styrene-based monomer, etc., chroman-indene-based resins, phenol-based resins, xylene resins, etc.; and the like.

Among those, hydrogenated terpene resins, alicyclic saturated hydrocarbon resins, and aliphatic petroleum resins are preferred from the viewpoint of suppressing coloration of the sealant. These may be used solely or in combination of two or more thereof. In the case of containing the tackifier resin (D), its content is preferably in the range of from 1 to 200 parts by mass, more preferably in the range of from 5 to 180 parts by mass, and still more preferably in the range of from 5 to 150 parts by mass based on 100 parts by mass of the block copolymer (A) from the viewpoint of obtaining a sealant which is excellent in molding processability, flexibility, and adhesiveness and also high in loss factor. A softening point of the tackifier resin (D) is preferably 50°C to 150°C, and more preferably 80°C to 150°C from the viewpoint of heat resistance.

### [Other additives]

So long as the gist of the present invention is not impaired, the sealant of the present invention may be subjected to crosslinking, if desired. In the case of performing crosslinking, the crosslinking is performed by adding a radical generator, a crosslinking agent, such as sulfur or a sulfur compound, etc., and further a crosslinking auxiliary, if desired, followed by kneading.

Examples of the radical initiator include organic peroxides, such as, hydroxy peroxides, e.g., t-butyl hydroperoxide, cumene hydroperoxide, 2,5-dimethylhexane-2,5-dihydroperoxide, etc.; dialkyl peroxides, e.g., di -t-butyl peroxide, t-butylcumyl peroxide, dicumyl peroxide, α,α'-bis(t-butylperoxy)-p-diisopropylbenzene,
2,5-dimethyl-2,5-di(t-butylperoxy)hexane,
2,5-dimethyl-2,5-di(t-butylperoxy)-hexyne-3, etc.; diacyl peroxides, e.g., acetyl peroxide, succinic peroxide, benzoyl peroxide, etc.; ester peroxides, e.g., t-butylperoxy acetate, t-butylperoxy isobutyrate, t-butylperoxy isopropyl carbonate, etc.; ketone peroxides, e.g., methyl ethyl ketone peroxide, cyclohexanone peroxide, etc.; inorganic peroxides, such as hydrogen peroxide, persulfates, metal oxides, etc.; azo compounds; mono- and disulfides; metal chelates; redox initiators; and the like. In the case of using such a radical generator, it is used in an amount preferably in the range of from 0.01 to 15 parts by mass, and more preferably in the range of from 0.05 to 10 parts by mass based on 100 parts by mass of the block copolymer (A).

Examples of a crosslinking method using a radical generator include a method of melt kneading the thermoplastic elastomer composition, the radical generator, and optionally other thermoplastic resin under heating; and the like. A heating temperature is preferably 140 to 230°C, and the melt kneading may be performed in a batchwise mode or a continuous mode by using an apparatus, such as ax extruder, a kneader, a roll, a plastograph, etc. The crosslinking reaction is advanced by such a melt kneading process.

Examples of the sulfur compound include sulfur monochloride, sulfur dichloride, and the like. In the case of using sulfur or a sulfur compound, its addition amount is preferably 0.1 to 20 parts by mass, and more preferably 0.2 to 10 parts by mass based on 100 parts by mass of the block copolymer (A). In the case of performing the crosslinking with sulfur or a sulfur compound, it is extremely preferred to use it in combination with a vulcanization accelerator as the crosslinking auxiliary.

Examples of the vulcanization accelerator include thiazoles, such as N,N-diisopropyl-2-benzothiazole-sulfenamide, 2-mercaptobenzothiazole, 2-(4-morpholinodithio)benzothiazole, etc.; guanidines, such as diphenyl guanidine, triphenyl guanidine, etc.; aldehyde-amine-based reaction products or aldehyde-ammonia-based reaction products, such as a butyl aldehyde-aniline reaction product, a hexamethylenetetramine-acetaldehyde reaction product, etc.; imidazolines, such as 2-mercaptoimidazoline, etc.; thioureas, such as thiocarbanilide, diethylurea, dibutylthiourea, trimethylthiourea, di-o-tolylthiourea, etc.; thiuram mono- or polysulfides, such as tetramethylthiuram monosulfide, tetramethylthiuram disulfide, pentamethylenethiuram tetrasulfide, etc.; thiocarbamates, such as zinc dimethyldithiocarbamate, zinc ethylphenyldithiocarbamate, sodium dimethyldithiocarbamate, selenium dimethyldithiocarbamate, tellurium diethyldithiocarbamate, etc.; xanthogenates, such as zinc dibutylxanthogenate, etc.; organic peroxides; zinc white; and the like. These vulcanization accelerators may be used solely or in combination of two or more thereof. In the case of use in combination with a vulcanization accelerator, its addition amount is preferably 0.05 to 30 parts by mass, more preferably 0.1 to 20 parts by mass, and still more preferably 0.2 to 10 parts by mass based on 100 parts by mass of the block copolymer (A).

So long as the gist of the present invention is not impaired, the sealant of the present invention may contain various additives, if desired. Examples of such an additive may include a lubricant, a filler, a flame retardant, an antioxidant, a heat stabilizer, a light resistant, a weather resistant, a metal deactivator, an ultraviolet absorber, a light stabilizer, a copper inhibitor, a reinforcing agent, an antistatic agent, an antibacterial agent, a fungicide, a dispersant, a colorant, a polyolefin resin, such as polyethylene, polypropylene, etc., an isobutylene/isoprene copolymer, a rubber, such as a silicone rubber, etc., an ethylene-vinyl acetate copolymer, a thermoplastic resin, such as an ABS resin, etc., and the like.

Among those, the lubricant has actions to improve fluidity of the sealant and also to suppress heat deterioration. Examples of the lubricant which may be used in the present invention include a silicone oil; hydrocarbon-based lubricants, such as a paraffin wax, a micro wax, a polyethylene wax, etc.; butyl stearate; stearic acid monoglyceride; pentaerythritol tetrastearate; stearyl stearate; and the like.

Examples of the antioxidant include a hindered phenol-based antioxidant and a phosphoric acid-based antioxidant. In the case of containing a filler in the sealant of the present invention, its content is preferably 1 to 20 parts by mass, more preferably 1 to 15 parts by mass, and still more preferably 5 to 15 parts by mass based on 100 parts by mass of the block copolymer (A).

Examples of the filler include calcium carbonate, talc, carbon black, titanium oxide, silica, clay, barium sulfate, magnesium carbonate, glass fibers, carbon fibers, and the like, with calcium carbonate being preferred.

In the case of containing the filler in the sealant of the present invention, its content is preferably in the range of from 10 to 200 parts by mass, and more preferably in the range of from 10 to 150 parts by mass based on 100 parts by mass of the whole of the sealant from the viewpoint of keeping flexibility and vibration-damping properties.

Examples of the flame retardant include phosphorus-based flame retardants, such as triphenyl phosphine, triallyl phosphate, an aromatic phosphate, a polyphosphate, red phosphorus, 2-ethylhexyldiphenyl phosphate, triethyl phosphate, etc.; and inorganic flame retardants, such as magnesium hydroxide, aluminum hydroxide, etc.

In the case of containing a polyolefin resin, its content is preferably in the range of from 1 to 100 parts by mass, more preferably in the range of from 5 to 50 parts by mass, and still more preferably in the range of from 5 to 30 parts by mass based on 100 parts by mass of the whole of the sealant.

In the sealant of the present invention, a total content of the block copolymer (A), the softening agent (B), the polyphenylene ether-based resin (C), the tackifier resin (D), and the aforementioned various additives is preferably 80% by mass or more, more preferably 90% by mass or more, and still more preferably 100% by mass.

### [Production method of sealant]

A production method of the sealant of the present invention is not particularly limited, and the aforementioned block copolymer (A) may be used directly as the sealant. In the case where the sealant includes other additives than the block copolymer (A), examples of the production method of the sealant include a method in which the block copolymer (A) and optionally the softening agent (B), the polyphenylene ether-based resin (C), the tackifier resin (D), and the other various additives are pre-blended and collectively mixed, and the mixture is then melt kneaded using a single-screw extruder, a multi-screw extruder, a Banbury mixer, a heating roll, a kneader of every kind, or the like; a method in which the block copolymer (A), examples of the production method of the sealant include a method in which the block copolymer (A) and optionally the softening agent (B), the polyphenylene ether-based resin (C), the tackifier resin (D), and the other various additives are fed from separate charge ports and then melt kneaded; and the like. As a pre-blending method, there is exemplified a method of using a mixing machine, such as a Henschel mixer, a high-speed mixer, a V blender, a ribbon blender, a tumbler blender, a conical blender, etc. A temperature at the time of melt kneading may be preferably arbitrarily selected within the range of from 120°C to 300°C.

### [Physical properties of sealant]

As for the sealant of the present invention, from the viewpoint of molding processability, its melt flow rate (MFR) measured under the conditions described in the Examples is preferably 10 g/10 min or more, more preferably 30 g/10 min or more, still more preferably 40 g/10 min or more, and yet still more preferably 50 or more.

As for the sealant of the present invention, from the viewpoint of flexibility, its hardness (type A hardness) measured under the conditions described in the Examples is preferably 60 or less, more preferably 55 or less, still more preferably 40 or less, yet still more preferably 30 or less, and even yet still more preferably 10 or less. From the viewpoint of strength, the foregoing hardness is preferably 0.1 or more, more preferably 0.5 or more, still more preferably 1 or more, and yet still more preferably 3 or more.

However, in the case of using the sealant of the present invention for an application for which very high flexibility is required, its type C hardness measured under the conditions described in the Examples is preferably 100 or less, and more preferably 50 or less, and from the viewpoint of strength, the type C hardness is preferably 1 or more, and more preferably 3 or more.

As for the sealant of the present invention, from the viewpoint of adhesiveness, its adhesive force measured under the conditions described in the Examples is preferably 0.2 N/25 mm or more, more preferably 0.5 N/25 mm or more, still more preferably 0.7 N/25 mm or more, and yet still more preferably 1 or more.

As for the sealant of the present invention, from the viewpoint that it is excellent in sound insulation properties and vibration-damping properties under high temperatures, its loss factor in the range of from 40 to 80°C under an excitation condition with a frequency of 4,000 Hz is preferably 0.070 or more, more preferably 0.075 or more, still more preferably 0.080 or more, and yet still more preferably 0.085 or more. The loss factor may be measured by the method described in the Examples.

The sealant of the present invention may be, for example, suitably used as a hot melt sealant. The sealant of the present invention is high in loss factor, so that it is excellent in sound insulation properties and vibration-damping properties. Thus, the sealant of the present invention may also be suitably used as a sound insulation sealant or a vibration-damping sealant (damping sealant).

In particular, since the sealant of the present invention is excellent in loss factor in a high frequency region in the neighborhood of 4,000 Hz even under relatively high temperatures of 40 to 80°C, it may be suitably used as a sealant for suppressing a noise or the like in such a high frequency region. The sealant of the present invention may be suitably used by, for example, attaching it as a vibration-damping sealant (damping sealant) within an automobile to be used at high temperatures to an automobile part.

The sealant of the present invention may also be used as a sealant for an automobile part or the like in combination with a block copolymer constituted of a polymer block containing a structural unit derived from an aromatic vinyl compound, such as styrene, etc., and a polymer block containing a structural unit derived from a conjugated diene, such as isoprene, butadiene, etc., or a hydrogenation product thereof. That is, though there is such a block copolymer or hydrogenation product thereof which is provided with sound insulation properties and vibration-damping properties in the neighborhood of 4,000 Hz in a temperature region at 40°C or lower, there may be the case where it is inferior in sound insulation properties and vibration-damping properties in the neighborhood of 4,000 Hz in a high-temperature region of 40°C or higher. In consequence, by using the sealant of the present invention in combination with the aforementioned block copolymer or hydrogenation product thereof, it is possible to provide a sealant which is excellent in sound insulation properties and vibration-damping properties over a region of normal temperature to a high temperature. In the case of combined use, the sealant of the present invention and the aforementioned block copolymer or hydrogenation product thereof may be mixed and used, or a laminate of the both may be formed on a target material.

By subjecting the sealant of the present invention to molding processing by applying a conventionally known molding method, such as heat pressing, injection molding, extrusion molding, calender molding, etc., it is possible to obtain a vibration damping member. The shape of the thus obtained vibration-damping member is optional, and suitable examples thereof include a disk shape, a plate shape, a cylinder shape, and the like.

### EXAMPLES

The present invention is hereunder described by reference to Examples, but it should not be construed that the present invention is limited to these Examples. β-farnesene (purity: 97.6% by mass, manufactured by Amyris, Inc.) was used for the following polymerization after purification with a molecular sieve of 3 angstroms and then distillation in a nitrogen atmosphere to remove hydrocarbon-based impurities inclusive of zingiberene, bisabolene, farnesene epoxide, farnesol isomers, E,E-farnesol, squalene, ergosterol, several kinds of dimers of farnesene, and the like.

### (1) Measurement of molecular weight distribution and peak top molecular weight (Mp):

A peak top molecular weight (Mp) of a styrene block and a peak top molecular weight (Mp) and a molecular weight distribution (Mw/Mn) of a block copolymer were determined in terms of a molecular weight as converted into standard polystyrene by means of GPC (gel permeation chromatography), and a peak top molecular weight (Mp) was determined from a position of an apex of the peak of the molecular weight distribution. Measurement apparatus and conditions are as follows.
- Apparatus: GPC apparatus "GPC8020", manufactured by Tosoh Corporation
- Separation column: "TSKgel G4000HXL", manufactured by Tosoh Corporation
- Detector: "RI-8020", manufactured by Tosoh Corporation
- Solvent: Tetrahydrofuran
- Solvent flow rate: 1.0 mL/min
- Sample concentration: 5 mg/10 mL
- Column temperature: 40°C

### (2) Measurement method of hydrogenation rate:

In each of the Examples and Comparative Examples, a block copolymer before hydrogenation and a block copolymer after hydrogenation (hydrogenated block copolymer) were each dissolved in deuterochloroform and measured for ¹H-NMR at 50°C by using "Lambda-500", manufactured by JEOL Ltd. A hydrogenation rate of a polymer block (b) in the hydrogenated block copolymer was calculated from peaks of protons which a carbon-carbon double bond had, the peaks appearing at 4.5 to 6.0 ppm of the resulting spectrum, according to the following equation.

Hydrogenation rate = {1 - (Molar number of carbon-carbon double bond contained per mole of block copolymer after hydrogenation)/(Molar number of carbon-carbon double bond contained per mole of block copolymer before hydrogenation)} x 100 (mol%)

### (3) Measurement method of melt flow rate (MFR):

A sealant obtained in each of the Examples and Comparative Examples was measured with Melt Indexer L244 (manufactured by Technol Seven Co., Ltd.) under conditions at 230°C and 98N in nozzle dimensions of 1 mm in diameter and 10 mm in length. The higher the MFR value, the more excellent the molding processability is.

### (4) Measurement method of hardness:

### <Type A hardness>

A sealant obtained in each of the Examples and Comparative Examples was subjected to compression molding at 200°C and 10 MPa for 2 minutes and then cooled at 1 MPa for 1.5 minutes, thereby obtaining a sheet (molded article) (length: 150 mm, width: 150 mm, thickness: 1 mm). A dumbbell No. 5 test piece in conformity with JIS K6251 was punched out from this sheet, thereby obtaining a test piece.

The obtained test piece was used and measured with an indenter of a type A durometer in conformity with JIS K6253-3. The lower the hardness, the more excellent the flexibility is.

### <Asker C hardness>

A sealant obtained in each of the Examples and Comparative Examples was subjected to heat press molding with a press molding machine at 230°C under a pressure of 10 MPa for 3 minutes, thereby obtaining a sheet-like test piece of 50 mm in length x 50 mm in width x 2 mm in thickness. This test piece was measured with an indenter of an Asker rubber hardness C type C durometer, manufactured by Kobunshi Keiki Co., Ltd. in conformity with JIS K7312. The lower the hardness, the more excellent the flexibility is.

### (5) Measurement method of adhesive force:

An aluminum plate of 75 mm in length x 25 mm in width x 0.5 mm in thickness (JIS H4000 A1050P) was used; this aluminum plate was pretreated by sanding with a sand paper (granularity: 100 (WTCC-D)); and subsequently, after degreasing with acetone, the resultant was subjected to a UV treatment (using "UVR-200G-SSII", manufactured by Sen Engineering Co., Ltd.) for 10 minutes, thereby forming an adherend.

A sheet of 75 mm in length x 25 mm in width x 1 mm in thickness was also punched out from the sheet of sealant obtained above in (4).

The sheet was placed on the aforementioned adherend, and the both were subjected to contact bonding with pressure rollers under conditions at a roller weight of 2 kgf and at a temperature of 23±2°C in a speed of 300 mm/min, thereby obtaining a laminate. This laminate was used as a test piece for measurement.

This test piece was used and subjected to a 180° peel test with an Instron's tensile tester (5566 Model) in a chuck-to-chuck distance of 10 cm at a tensile rate of 1 cm/min. The higher the value, the more excellent the adhesiveness is.

### (6) Loss factor

A sealant obtained in each of the Examples and Comparative Examples was subjected to compression molding at 200°C and 10 MPa for 2 minutes and then cooled at 1 MPa for 1.5 minutes, thereby obtaining a sheet (molded article) (length: 200 mm, width: 10 mm, thickness: 4 mm).

This test piece was measured for loss factor by the central excitation method (JIS K7391) (JIS G0602-1993). Measurement conditions were as follows.
Measurement temperature: 40°C, 60°C, and 80°C
Calculation method of loss factor: Half-power band width method Frequency: 4,000 Hz
Mass cancellation: Yes
Vibration mode: Antiresonance
Support: Steel plate

The larger the value of the loss factor, the higher the vibration-damping effect and the sound insulation effect are. It is considered that when the loss factor is 0.05 or more, the vibration-damping effect and the sound insulation effect are in general revealed.

### (7) Compression set:

A sealant obtained in each of the Examples and Comparative Examples was subjected to compression molding with a compression molding machine at 200°C for 3 minutes, thereby preparing a columnar test piece having a diameter of 13.0±0.5 mm and a thickness of 6.3±0.3 mm. This columnar test piece was measured for compression set after holding 25% compressive deformation for 22 hours at each temperature of two points of 70°C and 100°C in conformity with JIS K6262. The smaller this value, the more excellent the compression set at high temperatures is.

### (8) Modulus of repulsion elasticity (vibration-damping properties):

A sealant obtained in each of the Examples and Comparative Examples was used and subjected to compression molding with a compression molding machine at 200°C for 3 minutes, thereby preparing a columnar test piece having a diameter of 29.0±0.5 mm and a thickness of 12.5±0.5 mm. This test piece was used and measured for modulus of repulsion elasticity at 25°C by using a Lupke type rebound reliance tester in conformity with JIS K6255. The smaller the value of the modulus of repulsion elasticity, the more excellent the vibration-damping properties are.

### <Block copolymer (A)>

### [Production Example 1]

50.0 kg of cyclohexane as a solvent and 41.3 g of a 10.5% by mass cyclohexane solution of sec-butyllithium (content of sec-butyllithium: 4.3 g) as an anionic polymerization initiator were charged in a nitrogen-purged, dried pressure container. After the temperature was raised to 50°C, 1.12 kg of styrene (1) was added to perform polymerization for 1 hour; subsequently, 10.25 kg of β-farnesene was added to perform polymerization for 2 hours; and additionally, 1.12 kg of styrene (2) was added to perform polymerization for 1 hour. There was thus obtained a reaction solution containing a polystyrene-poly(β-farnesene)-polystyrene triblock copolymer (polymerization step).

To this reaction solution, palladium carbon (palladium supporting amount: 5% by mass) as a hydrogenation catalyst was added in an amount of 5% by mass relative to the block copolymer to perform a reaction under conditions at a hydrogen pressure of 2 MPa and at 150°C for 10 hours. After allowing to stand for cooling and allowing to stand for pressure discharge, the palladium carbon was removed by means of filtration, and the filtrate was concentrated and further dried in vacuo. There was thus obtained a hydrogenation product of a polystyrene-poly(β-farnesene)-polystyrene triblock copolymer (hereinafter referred to as "block copolymer (I)-1") (hydrogenation step). The block copolymer (I)-1 was subjected to the aforementioned evaluations.

As for the peak top molecular weight (Mp) of the styrene block in the block copolymer (I)-1, in the process of polymerizing the aforementioned polystyrene-poly(β-farnesene)-polystyrene triblock copolymer, a measured value of the peak top molecular weight (Mp) of the polystyrene obtained by sampling after polymerizing the styrene (1) was defined as the peak top molecular weight (Mp) of the styrene block in the block copolymer (I)-1.

The results are shown in Table 1.

### [Production Example 2]

The same operations as in the polymerization step of Production Example 1 were followed to obtain a reaction solution containing a polystyrene-poly(β-farnesene)-polystyrene triblock copolymer. Thereafter, the reaction solution was concentrated without carrying out the hydrogenation step, followed by drying in vacuo. There was thus obtained a polystyrene-poly(β-farnesene)-polystyrene triblock copolymer (hereinafter referred to as "block copolymer (I)-2"). The block copolymer (I)-2 was subjected to the aforementioned evaluations. The results are shown in Table 1.

### [Production Examples 3 to 6, 10, and 12]

Block copolymers (I)-3 to (I)-5, (I')-6, (I)-10, and (I')-12 were produced in the same manner as in Production Example 1, except for following the blending shown in Table 1. The obtained block copolymers (I)-3 to (I)-5, (I')-6, (I)-10, and (I')-12 were each subjected to the aforementioned evaluations. The results are shown in Table 1.

### [Production Examples 7, 9, and 11]

Block copolymers (I')-7, (I')-9, and (I')-11 were produced in the same manner as in Production Example 1, except for mixing cyclohexane as a solvent with tetrahydrofuran (THF) as a Lewis base and following the blending shown in Table 1. The obtained block copolymers (I')-7, (I')-9, and (I')-11 were each subjected to the aforementioned evaluations. The results are shown in Table 1.

### [Production Example 8]

A block copolymer (I')-8 was produced in the same manner as in Production Example 2, except for mixing cyclohexane as a solvent with N,N,N',N'-tetramethylethylenediamine (TMEDA) as a Lewis base and following the blending shown in Table 1. The obtained block copolymer (I')-8 was subjected to the aforementioned evaluations. The results are shown in Table 1.

**Table 1**

| | | | | Production Example | | | | | | | | | | | |
|---|---|---|---|---|---|---|---|---|---|---|---|---|---|---|---|
| | | | | 1 | 2 | 3 | 4 | 5 | 6 | 7 | 8 | 9 | 10 | 11 | 12 |
| Block copolymer | | | | (I)-1 | (I)-2 | (I)-3 | (I)-4 | (I)-5 | (I')-6 | (I')-7 | (I')-8 | (I')-9 | (I)-10 | (I')-11 | (I')-12 |
| Use amount [kg] | Solvent | | Cyclohexane | 50.0 | 50.0 | 50.0 | 50.0 | 50.0 | 50.0 | 50.0 | 50.0 | 50.0 | 50.0 | 50.0 | 50.0 |
| | Polymerization initiator | | sec-Butyllithium solution (10.5% by mass cyclohexane solution) | 0.0413 | 0.0413 | 0.0369 | 0.0980 | 0.0816 | 0.1633 | 0.127 | 0.1127 | 0.1219 | 0.0149 | 0.0243 | 0.0287 |
| | (a) | | Styrene (1) | 1.12 | 1.12 | 1.87 | 1.12 | 0.94 | 1.50 | 1.67 | 1.85 | 2.00 | 1.32 | 1.45 | 1.29 |
| | | | Styrene (2) | 1.12 | 1.12 | 1.87 | 1.12 | 0.94 | 1.50 | 1.67 | 1.85 | 2.00 | 1.32 | 1.45 | 1.29 |
| | (b) | (b1) | β-Famesene | 10.25 | 10.25 | 8.75 | 5.12 | 5.92 | | | | | 6.17 | | |
| | | (b2) | Isoprene | | | | 5.12 | | 13.67 | 13.33 | 14.79 | | | 5.90 | 3.77 |
| | | | Butadiene | | | | | 4.70 | | | | 8.50 | | | 2.45 |
| | Lewis base | | THF | | | | | | | 0.288 | | 0.108 | | 0.258 | |
| | | | TMEDA | | | | | | | | 0.066 | | | | |
| (a)/(b) [mass ratio] (*1) | | | | 18/82 | 18/82 | 30/70 | 18/82 | 15/85 | 18/82 | 20/80 | 20/80 | 32/68 | 30/70 | 33/67 | 29/71 |
| (b1)/(b) [% by mass] (*2) | | | | 100 | 100 | 100 | 50 | 56 | 0 | 0 | 0 | 0 | 100 | 0 | 0 |
| Polymer skeleton (*3) | | | | St-F-St | St-F-St | St-F-St | St-(F/Ip)-St | St-(F/Bd)-St | St-Ip-St | St-Ip-St | St-Ip-St | St-Bd-St | St-F-St | St-Ip-St | St-(Ip/Bd)-St |
| Physical properties | | | Peak top molecular weight (Mp) of styrene block | 16,600 | 16,600 | 31,000 | 7,000 | 7,000 | 5,600 | 8,000 | 10,000 | 10,000 | 53,900 | 37,500 | 27,500 |
| | | | Peak top molecular weight (Mp) of block copolymer | 200,500 | 188,000 | 222,000 | 103,000 | 149,000 | 89,000 | 114,000 | 142,000 | 142,000 | 385,000. | 307,800 | 280,500 |
| | | | Molecular weight distribution (Mw/Mn) | 1.23 | 1.20 | 1.13 | 1.06 | 1.08 | 1.06 | 1.08 | 1.08 | 1.08 | 1.18 | 1.09 | 1.06 |
| | | | Hydrogenation rate (%) (*4) | 93.2 | 0 | 91.0 | 98.7 | 99.0 | 97.8 | 97.1 | 0 | 97.1 | 90.0 | 97.1 | 99.4 |

| | | | | | | | | | | | | | | | |
|---|---|---|---|---|---|---|---|---|---|---|---|---|---|---|---|
| (*1) (a)/(b) shows a mass ratio of the total amount of the structural unit (a) to the total amount of the structural unit (b). (*2) (b1)/(b) shows the content of the structural unit (b1) derived from famesene in the total amount of the structural unit (b) derived from the conjugated diene. (*3) St-F-St shows a polystyrene-poly(β-famesene)-polystyrene triblock copolymer. St-(F/Ip)-St shows a polystyrene-poly(β-famesene/isoprene)-polystyrene triblock copolymer. St-(F/Bd)-St shows a polystyrene-poly(β-famesene/butadiene)-polystyrene triblock copolymer. St-Ip-St shows a polystyrene-polyisoprene-polystyrene triblock copolymer. St-Bd-St shows a polystyrene-polybutadiene-polystyrene triblock copolymer. (*4) The hydrogenation rate shows a hydrogenation rate of carbon-carbon double bond in the structural unit (b) derived from the conjugated diene. | | | | | | | | | | | | | | | |

### [Examples 1 to 6 and Comparative Examples 1 to 6]

The obtained block copolymers (I)-1 to (I-5) and (I)-10, and (I')-6 to (I')-9, (I')-11 and (I')-12 were used as sealants of Examples 1 to 6 and Comparative Examples 1 to 6, respectively and subjected to the aforementioned evaluations. The results are shown in Table 2.

**Table 2**

| | Example | | | | | | Comparative Example | | | | | |
|---|---|---|---|---|---|---|---|---|---|---|---|---|
| | 1 | 2 | 3 | 4 | 5 | 6 | 1 | 2 | 3 | 4 | 5 | 6 |
| Block copolymer | (I)-1 | (I)-2 | (I)-3 | (I)-4 | (I)-5 | (I)-10 | (I')-6 | (I')-7 | (I')-8 | (I')-9 | (I')-11 | (I')-12 |
| Evaluation results | | | | | | | | | | | | |
| MFR [230°C, 98N] (g/10 min) | 67 | >700 | 46 | 57 | 43 | 2.1 | 29 | 87 | 30 | 0.7 | 0.02 | Not flowed |
| Hardness [type A] | 7 | 6 | 22 | 55 | 57 | 25 | 67 | 64 | 82 | 85 | 68 | 78 |
| Adhesive force [to aluminum plate] (N/25 mm) | 1.80 | 1.35 | 0.80 | 0.55 | 0.94 | 0.75 | 0 | 0.17 | 0.09 | 0 | 0.03 | 0 |
| Loss factor (40°C) | 0.087 | 0.082 | 0.087 | 0.072 | 0.071 | 0.086 | 0.014 | 0.045 | 0.132 | 0.008 | 0.047 | 0.016 |
| Loss factor (60°C) | 0.089 | 0.084 | 0.089 | 0.071 | 0.072 | 0.090 | 0.014 | 0.034 | 0.037 | 0.006 | 0.035 | 0.017 |
| Loss factor (80°C) | 0.090 | 0.099 | 0.090 | 0.075 | 0.078 | 0.097 | 0.029 | 0.075 | 0.046 | 0.029 | 0.076 | 0.032 |

It is noted from Table 2 that since the sealants of Examples 1 to 6 satisfy the constituent features of the present invention, they are excellent in molding processability, flexibility, and adhesiveness and are also high in loss factor at 4,000 Hz over 40 to 80°C and excellent in sound insulation properties and vibration-damping properties in a high frequency region under high temperatures.

On the other hand, it is noted that since the sealants of Comparative Examples 1 to 6 do not include the structural unit (b1) derived from farnesene, all of them are inferior in flexibility, low in adhesive force, low in loss factor at 40 to 80°C, and inferior in sound insulation properties and vibration-damping properties. Although the sealant of Comparative Example 2 is equal in the loss factor at 80°C to that of the present invention, it is low in the loss factor at 60°C or lower and inferior in sound insulation properties and vibration-damping properties in the neighborhood of normal temperature. In addition, it is noted that though the sealant of Comparative Example 3 is high in the loss factor at 40°C, it is low in the loss factor at 60°C or higher, so that it is not suitable as a sealant to be used under high temperatures.

### [Examples 7 to 14 and Comparative Examples 7 to 22]

Respective components shown in Tables 3 and 4 were mixed by using a sigma blade type kneader at 200 to 230°C for 2 hours while following the blending shown in Tables 3 and 4, thereby preparing sealants. The obtained sealants were used and measured for various measurements by the aforementioned methods. The results are shown in Tables 3 and 4.

The respective components shown in Tables 3 and 4 are as follows.
- Softening agent (B): Diana Process Oil PW-90 (hydrogenated paraffin-based oil, manufactured by Idemitsu Kosan Co., Ltd.)
- Polyphenylene ether-based resin (C): Modified polyphenylene ether resin; a trade name "Zylon 500H", manufactured by Asahi Kasei Chemicals Corporation
- Tackifier resin (D): Hydrogenated alicyclic hydrocarbon resin; a trade name "Escorez ECR-227E", manufactured by Exxon Mobil Corporation
- Filler: Heavy calcium carbonate; a trade name "Escaron 200", manufactured by Sankyo Seifun Co., Ltd.
- Polyolefin resin: Homopolypropylene; a trade name "Novatec PP MA3", MFR = 10 g/10 min, manufactured by Japan Polypropylene Corporation
- Antioxidant-1: Hindered phenol-based antioxidant; a trade name "Irganox 1010", manufactured by Ciba Specialty Chemicals Inc.
- Antioxidant-2: Phosphorus-based antioxidant; a trade name "Irgafos 168", manufactured by Ciba Specialty Chemicals Inc.

**Table 3**

| | Example | | | Comparative Example | | | | | |
|---|---|---|---|---|---|---|---|---|---|
| | 7 | 8 | 9 | 7 | 8 | 9 | 10 | 11 | 12 |
| Block copolymer (a): | | | | | | | | | |
| Block copolymer (I)-4 | 100 | | | | | | | | |
| Block copolymer (I)-5 | | 100 | | | | | | | |
| Block copolymer (I)-10 | | | 100 | | | | | | |
| Block copolymer (I')-6 | | | | 100 | | | | | |
| Block copolymer (I')-7 | | | | | 100 | | | | |
| Block copolymer (I')-8 | | | | | | 100 | | | |
| Block copolymer (I')-9 | | | | | | | 100 | | |
| Block copolymer (I')-11 | | | | | | | | 100 | |
| Block copolymer (I')-12 | | | | | | | | | 100 |
| Softening agent (B) | 300 | 300 | 300 | 300 | 300 | 300 | 300 | 300 | 300 |
| Tackifier resin (D) | 120 | 120 | 120 | 120 | 120 | 120 | 120 | 120 | 120 |
| Evaluation results | | | | | | | | | |
| MFR [230°C, 98N] (g/10 min) | >700 | >700 | >700 | 320 | >700 | >700 | 124 | >700 | 30 |
| Hardness [type A] | 21 | 24 | 0 | 9 | 5 | 26 | 29 | 0 | 3 |
| Hardness [type C] | 52 | 57 | 8 | 27 | 13 | 60 | 68 | 9 | 21 |
| Adhesive force [to aluminum plate] (N/25 mm) | 2.02 | 2.62 | 3.82 | 1.32 | 1.76 | 1.43 | 1.52 | 1.87 | 1.67 |
| Loss factor (40°C) | 0.081 | 0.082 | 0.091 | 0.021 | 0.062 | 0.164 | 0.158 | 0.059 | 0.016 |
| Loss factor (60°C) | 0.079 | 0.080 | 0.093 | 0.022 | 0.054 | 0.051 | 0.045 | 0.061 | 0.025 |
| Loss factor (80°C) | 0.078 | 0.081 | 0.109 | 0.041 | 0.082 | 0.046 | 0.039 | 0.068 | 0.043 |
| Compression set [70°C] (%) | 53 | 48 | 10 | 84 | 73 | 96 | 54 | 18 | 31 |
| Compression set [100°C] (%) | 87 | 78 | 44 | 94 | 91 | 100 | 89 | 63 | 98 |
| Modulus of repulsion elasticity [25°C] (%) | 23 | 26 | 4 | 49 | 12 | 3 | 4 | 11 | 54 |

**Table 4**

| | Example | | | | | Comparative Example | | | | | | | | | |
|---|---|---|---|---|---|---|---|---|---|---|---|---|---|---|---|
| | 10 | 11 | 12 | 13 | 14 | 13 | 14 | 15 | 16 | 17 | 18 | 19 | 20 | 21 | 22 |
| Block copolymer (a): | | | | | | | | | | | | | | | |
| Block copolymer (I)-10 | 100 | 100 | 100 | 100 | 100 | | | | | | | | | | |
| Block copolymer (I')-11 | | | | | | 100 | | 100 | | 100 | | 100 | | 100 | |
| Block copolymer (I')-12 | | | | | | | 100 | | 100 | | 100 | | 100 | | 100 |
| Softening agent (B) | 300 | 350 | 300 | 300 | 100 | 300 | 300 | 350 | 350 | 300 | 300 | 300 | 300 | 100 | 100 |
| Tackifier resin (D) | | 180 | 133 | 138 | 138 | | | 180 | 180 | 133 | 133 | 138 | 138 | 138 | 138 |
| Polyphenylene ether-based resin (C) | | | 44 | 38 | 38 | | | | | 44 | 44 | 38 | 38 | 38 | 38 |
| Filler | | 150 | 133 | 138 | 138 | | | 150 | 150 | 133 | 133 | 138 | 138 | 138 | 138 |
| Polyolefin resin | | | | 19 | 19 | | | | | | | 19 | | 19 | 19 |
| Antioxidant-1 | | 1 | 11 | 12 | 12 | | | 1 | 1 | 11 | 11 | 12 | 12 | 12 | 12 |
| Antioxidant-2 | | 1 | 11 | 12 | 12 | | | 1 | 1 | 11 | 11 | 12 | 12 | 12 | 12 |
| Evaluation results | | | | | | | | | | | | | | | |
| MFR [230°C, 98N] (g/10 min) | 108 | >700 | >700 | >700 | 60 | 58 | 1.6 | >700 | 222 | 176 | 10 | 240 | 13 | 26 | 1.1 |
| Hardness [typeA] | 0 | 0 | 4 | 3 | 16 | 0 | 3 | 0 | 2 | 1 | 3 | 4 | 20 | 40 | 52 |
| Hardness [type C] | 5 | 4 | 13 | 24 | 42 | 5 | 19 | 4 | 15 | 17 | 26 | 34 | 50 | 60 | 75 |
| Adhesive force [to aluminum plate] (N/25 mm) | 3.20 | 3.65 | 3.76 | 3.67 | 2.15 | 2.12 | 1.89 | 1.98 | 1.86 | 2.54 | 2.23 | 2.34 | 2.14 | 1.78 | 1.72 |
| Loss factor (40°C) | 0.087 | 0.092 | 0.090 | 0.089 | 0.091 | 0.051 | 0.021 | 0.058 | 0.022 | 0.063 | 0.021 | 0.065 | 0.028 | 0.056 | 0.023 |
| Loss factor (60°C) | 0.089 | 0.095 | 0.091 | 0.090 | 0.092 | 0.059 | 0.023 | 0.062 | 0.030 | 0.067 | 0.031 | 0.052 | 0.033 | 0.058 | 0.032 |
| Loss factor (80°C) | 0.089 | 0.096 | 0.092 | 0.091 | 0.087 | 0.067 | 0.045 | 0.063 | 0.057 | 0.063 | 0.052 | 0.076 | 0.054 | 0.067 | 0.045 |
| Compression set [70°C] (%) | 4 | 13 | 8 | 5 | 16 | 7 | 23 | 22 | 33 | 30 | 47 | 13 | 18 | 20 | 25 |
| Compression set [100°] (%) | 36 | 55 | 60 | 57 | 54 | 49 | 90 | 76 | 100 | 88 | 100 | 68 | 92 | 89 | 95 |
| Modulus of repulsion elasticity [25°C] (%) | 18 | 3 | 11 | 10 | 4 | 25 | 72 | 7 | 32 | 11 | 52 | 11 | 34 | 15 | 36 |

As is clear from Tables 3 and 4, as compared with the sealants of Comparative Examples 7 to 22, the sealants of Examples 7 to 14 have equal or more performances in the compression set (heat resistance) at high temperatures and modulus of repulsion elasticity and are excellent in molding processability, flexibility, and adhesiveness, high in loss factor at 4,000 Hz over 40 to 80°C, and excellent in sound insulation properties and vibration-damping properties (vibration attenuation properties) in a high frequency region under high temperatures.

## Claims

1. A sealant comprising a block copolymer (A) comprising a polymer block (a) comprising a structural unit derived from an aromatic vinyl compound and a polymer block (b) comprising 1 to 100% by mass of a structural unit (b1) derived from farnesene and 99 to 0% by mass of a structural unit (b2) derived from a conjugated diene other than farnesene, a mass ratio [(a)/(b)] of the polymer block (a) to the polymer block (b) being 5/95 to 45/55.

2. The sealant according to claim 1, wherein a peak top molecular weight (Mp) of the block copolymer (A) determined by conversion into standard polystyrene by gel permeation chromatography is 4,000 to 500,000.

3. The sealant according to claim 1 or 2, wherein in the block copolymer (A), its loss factor in the range of from 40 to 80°C under an excitation condition with a frequency of 4,000 Hz is 0.07 or more.

4. The sealant according to any of claims 1 to 3, wherein the aromatic vinyl compound is styrene.

5. The sealant according to any of claims 1 to 4, wherein the farnesene is β-farnesene.

6. The sealant according to any of claims 1 to 5, wherein the conjugated diene other than farnesene is at least one selected from isoprene, butadiene, and myrcene.

7. The sealant according to any of claims 1 to 6, wherein a molecular weight distribution (Mw/Mn) of the block copolymer (A) is 1 to 4.

8. The sealant according to any of claims 1 to 7, wherein the block copolymer (A) is a hydrogenated block copolymer having a hydrogenation rate of a carbon-carbon double bond in the polymer block (b) of 70 mol% or more.

9. The sealant according to any of claims 1 to 8, further comprising a softening agent (B).

10. The sealant according to any of claims 1 to 9, further comprising a polyphenylene ether-based resin (C).

11. The sealant according to any of claims 1 to 10, further comprising a tackifier resin (D).
